# EUROPEAN PATENT APPLICATION

(11) **EP 0 585 089 A2**
(43) Date of publication of application: **02.03.1994**
(21) Application number: 93306638.3
(22) Date of filing: 20.08.1993
(51) Int. Cl.: H04B 7/26, H04J 4/00

(54) **Digital block processor for transmitting a plurality of channels in a wireless radiotelephony system**

(30) Priority: 26.08.1992 US 935625
(71) Applicant: AT&T Corp., New York, NY 10013-2412 (US)
(72) Inventor: Copley, Terry William, New Vernon, New Jersey 07976 (US)
(74) Representative: Buckley, Christopher Simon Thirsk

(57) **Abstract**

A digital block transmitter system, in a cellular/wireless radiotelephony system, generates (202) and bandshifts (207,210) a block of cellular/wireless transmit channels to a low IF by digital processing. This digital block IF signal (at 210) is applied to a precision high speed D/A converter (211) and converted to an analog time series. The resulting composite signal is heterodyned (212), amplified (213), and filtered using conventional analog techniques to produce transmission signals at RF.

## Description

### Field of the Invention

This invention relates to wireless telecommunication systems having a plurality of communication channels each having a single carrier at a separate frequency dedicated to that channel. It is particularly concerned with the forward link radio transmitter of such a wireless telecommunication system located at a stationary signal radiation site.

### Background of the Invention

Presently the forward link signal processors of a wireless telephone communication system such as a cell site or a microcell require a separate radio transceiver for each transmission channel in service. For example, in a cell site serving up to 30 channels, 30 individual transceivers are required. These transceivers, designated radio channel units (RCUs), are individually expensive and represent a major portion of the cell site or microcell cost. Common equipment serving a plurality of channels may be shared to reduce total cost, volume, weight and power consumption.

### Summary of the Invention

A digital block transmitter system, in a cellular/wireless radiotelephony system, generates and bandshifts a block of cellular/wireless transmit channels to a low IF by digital processing. This digital block IF signal is applied to a precision high speed D/A converter and converted to an analog time series. The resulting composite signal is heterodyned, amplified, and filtered using analog techniques to produce transmission signals at RF.

In particular applications telecommunication transmit channels may encompass analog FM voice signals; analog FM supervisory tones; analog FM signaling tones; and digital FSK or PSK data. These transmit channels may, in accord with the principles of the invention all be processed as a block.

### Brief Description of the Drawing

In the drawing:

FIG. 1 is a block diagram of an illustrative wireless communication system embodying the principles of the invention.

FIG. 2 is a block schematic of an illustrative FM digital block transmitter embodying the principles of the invention.

### Detailed Description

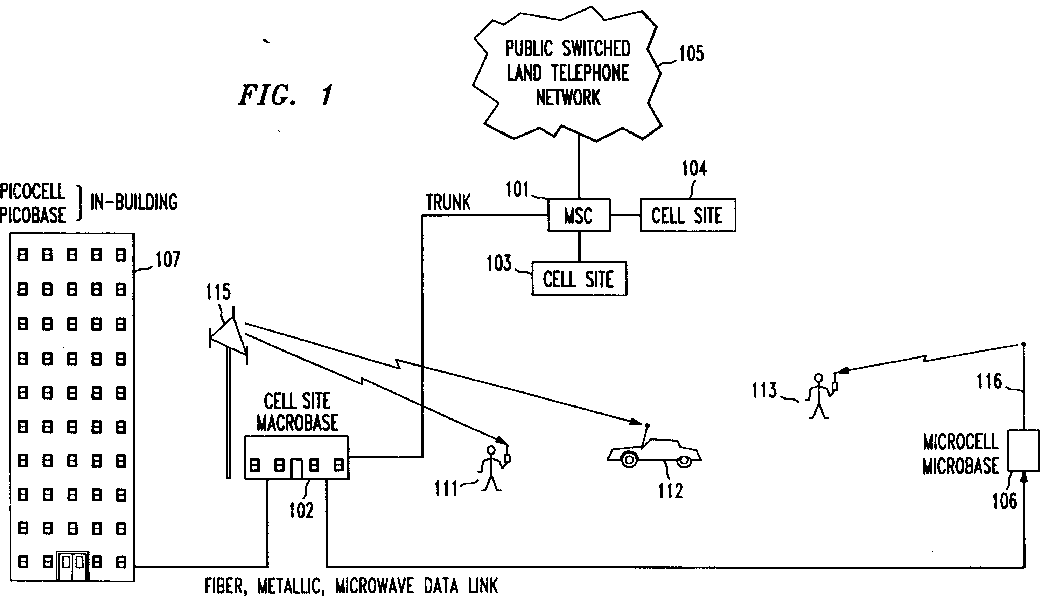

An illustrative wireless telephone system is shown in the FIG. 1. A mobile switching center 101 (MSC) is connected, via a trunk or microwave link, to three cell sites 102, 103 and 104. It interconnects these cell sites 102-104 to a public switched land telephone network 105. Each cell site 102-104 services a defined geographical service area. The illustrative cell site 102 is connected to a microcell 106 located within its service area and a picocell (an in building wireless system) serving a building 107 within the service area. These connections may be implemented using fiber optics, metallic wire, point-to-point microwave links or a combination of these connections.

The cell site 102 serves as a macrobase station which provides telephone service to personal communication devices of pedestrians 111 and mobile radio telephone service to mobile vehicles 112 within its service area. In addition it serves as a control center servicing the picocell of building 107 and microcell 106 (serving the pedestrian 113) and interconnecting them to the MSC 101.

Each of the macrocells 102 - 104, microcells and picocells includes one or more antenna for for transmitting and receiving radio signals. Antenna 115 serves the macrobase 102. Micro cell 106 has the antenna 116. The picocell includes in-building antennas (not shown). Voice and data signals are received by one or more of these antennas as one or more RF block signals. Some receive channels may be dedicated to voice or to data or in the general case a channel may handle both voice and data signals.

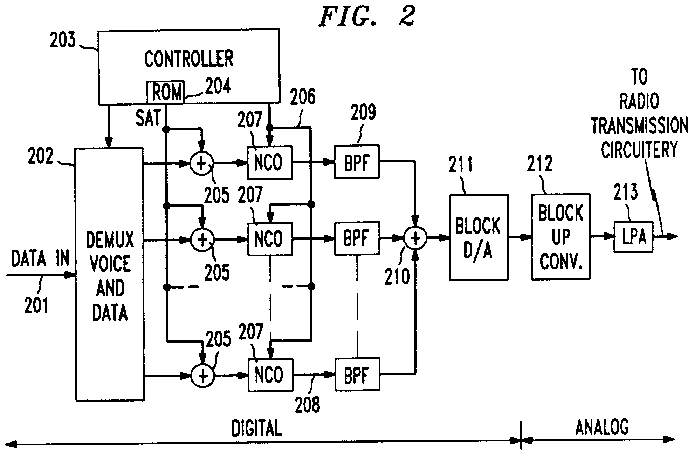

An analog FM digital block transmitter, serving the forward transmission link of one of the cell service areas of FIG. 1 is shown in FIG. 2 Such a transmitter may be located at the central cell control site, microcell location, or the picocell location for providing wide area, local area and in-building service.

A block schematic of an illustrative FM digital block transmitter is shown in the FIG. 2. Multiplexed voice and data signals are applied to the digital block transmitter at input lead 201. This input data stream contains individual voice channels with associated signaling data. Individual channels may be encoded in a time division multiplexed PCM format that is standard for the telecommunications industry, for example, DS1. Alternative standard or non-standard digital interfaces are acceptable within the scope of the invention. The input transmission medium may be metallic, fiber optic, microwave or a combination of these media.

The individual transmission channels are demultiplexed and voice or data is recovered for each channel by a digital demultiplexing circuit 202. The demultiplexing hardware, as well as other digital processing elements of the block transmitter are initialized and controlled by a controller processor 203. When applied to the AMPS North American analog cellular standard, the controller processor 203 holds, in a ROM digital memory 204, a time domain representation of the specific Supervisory Audio Tone (SAT) that is used at the block transmitter location. The sinusoidal amplitude of the operative SAT is digitally summed in the adder circuits 205 with the voice and/or data samples obtained from the demultiplexer circuit 202 for each channel.

The composite voice and/or data signals plus SAT digital samples are applied to a Numerically Controlled Oscillator (NCO) 207 for each channel. Each NCO 207 produces a digitally encoded carrier at a programmically controlled Intermediate Frequency (IF), supplied by the controller 203 on lead 206. In transmitters operating under the AMPS standard, the IF carrier produced by the NCO 207 is FM modulated by the composite voice and/or data signal plus SAT digital values applied to the NCO 207. When AMPS blank and burst Manchester encoded data messages are to be sent, the NCO 207 produces FSK modulated digital samples within the desired IF channel. The NCO 207 may also be used for non-AMPS air interface standards. For example, the NCO 207 may be programmically controlled to produce Differential Quadrature Phase Shift key symbols used in the IS-54 TDMA air interface.

At its output lead 208, each NCO 207 produces a modulated IF carrier within each channel assigned to the block transmitter. The NCO outputs are applied to a digital band pass filter 209 to remove noise and undesired intermodulation products that may be present outside the block or in other channels within the block. The filtered signals are all then digitally summed, in the summing circuit 210 to produce a composite sample data stream for all the channels. The composite digital data stream is applied to broad-band Digital-to-Analog (D/A) converter 211 to create an analog representation of the IF transmission block.

Following conversion to the analog representation, the block IF signal is applied to the up converter 212 which generates the cellular RF frequency using conventional heterodyne, analog filter and amplifier hardware. The low power block RF signal is sent to a Linear Power Amplifier (LPA) 213 for amplification to the high power levels required for radiation by the antennas 115 and 116 located at the block transmitter location, as shown in the FIG. 1.

## Claims

1. A digital block transmitter system, CHARACTERIZED BY: means (202) for demultiplexing a plurality of cellular digital transmission channels, means (205) connected to the means for demultiplexing for combining the digital transmission channels with a SAT signal, means (207) connected to the means for combining for generating digitally sampled data streams representing a plurality of modulated IF carriers, and means (210) responsive to the means for generating for converting the digitally sampled data stream into an analog time series signal.

2. A system as claimed in claim 1 wherein the means for demultiplexing comprises a digital demultiplexer having an input (201) for receiving multiplexed voice and data signals and circuitry therein for generating a plurality of digitally encoded channels.

3. A system as claimed in claim 1 or 2 wherein the means for combining comprises an array of summing circuits (205).

4. A system as claimed in claim 3 wherein the means for generating comprises an array of numerically controlled oscillators (202) each being responsive to an output of one of the summing circuits.

5. A method for processing a plurality of channels in a wireless radiotelephone system to generate a block signal incorporating the plurality of channels into a single block signal for radio transmission, CHARACTERIZED BY the steps of demultiplexing a plurality of voice and data signals into a plurality of individual digitally encoded channels, generating a modulated digitally sampled data stream at IF for each of the plurality of individual channels, bandpass filtering and summing of all the digitally sampled data streams into an IF block digital data stream, converting the IF block digital data stream into an RF analog signal, and coupling the RF analog signal to high power radio transmission circuitry.
